# EUROPÄISCHE PATENTSCHRIFT

(11) **EP 0 696 236 B1**
(45) Veröffentlichungstag und Bekanntmachung des Hinweises auf die Patenterteilung: **30.10.1996**
(21) Anmeldenummer: 94916164.0
(22) Anmeldetag: 28.04.1994
(51) Int. Cl.: B07C 5/34, B07C 5/36

(54) **VERFAHREN UND VORRICHTUNG ZUR SORTIERUNG VON MATERIALTEILEN**
PROCESS AND DEVICE FOR SORTING MATERIALS
PROCEDE ET DISPOSITIF PERMETTANT DE TRIER DES MATERIAUX

(30) Priorität: 30.04.1993 DE 4314396; 20.06.1993 DE 4320331
(43) Veröffentlichungstag der Anmeldung: 14.02.1996
(73) Patentinhaber: Massen, Robert, Prof. Dr., D-78337 Öhningen (DE)
(72) Erfinder: Massen, Robert, Prof. Dr., D-78337 Öhningen (DE)
(74) Vertreter: Leiser, Gottfried, Dipl.-Ing.
(86) Internationale Anmeldenummer: EP9401348
(87) Internationale Veröffentlichungsnummer: WO9425186

(56) Entgegenhaltungen:
- DE-A- 3 611 536
- DE-A- 4 130 373
- US-A- 5 041 996

## Beschreibung

Die Erfindung betrifft ein Verfahren zur Sortierung von Materialteilen, insbesondere von Kunststoffteilen.

Zur Trennung von Kunststoffen im Rahmen des Recycling sind berührungslose optische Verfahren auf der Grundlage der NIR-Spektroskopie bekannt. Hierbei werden die Kunststoffteile mit einer Lichtquelle im nahen Infrarot beleuchtet und das Remissionspektrum gewonnen. Dieses zeigt ausgeprägte Unterschiede auf, anhand denen eine Trennung nach Stoffsorten erfolgen kann. Bekannte Geräte dieser Art erfassen ein vorbeigeführtes Kunststoffteil wie z.B. eine Flasche, einen Becher od. dgl. mit einem oder mehreren Meßflecken und berechnen aus dem durch den beleuchteten Meßfleck zurückgeworfenen Licht das NIR-Spektrum. Voraussetzung ist allerdings, daß der Meßfleck nicht durch Etikette, Metallprägungen, oder ähnliche, das Remissionspektrum verfälschende Aufkleber gestört wird. Auch steile Raumkanten können das Meßergebnis verfälschen bzw. unsicher machen. Ähnliche berührungslose Sensoren auf der Basis von Mikrowellen oder Röntgenstrahlung sind bekannt, unterliegen aber den gleichen Einschränkungen.

Es ist andrerseits ein ein optisches, auf der Verwendung von Farbvideokameras basierendes bildgebendes System zur Farbsortierung von Kunststoffen bekannt. Hierbei werden mit Hilfe einer Farbvideokamera Bilder der vorbeigeführten Kunststoffteile entweder im Auflicht oder im Durchlicht erfaßt und in einem Bildrechner eine Form- und/oder Farbklassifikation durchgeführt. Ein hierfür geeigneter Bildrechner ist beispielsweise aus der PCT-Veröffentlichung WO 90/10273 bekannt, in der die Durchführung der Form- und Farbklassifikation an Hand der automatischen optischen Klassifikation von Pflanzen beschrieben ist. Mit diesem bekannten System ist es aber nicht möglich, Kunststoffteile nach Stoffsorten zu unterscheiden und zu trennen.

In dem Dokument US-A-5 041 996 ist ein Verfahren zur Sortierung von Materialteilen beschrieben, bei dem diese beiden bekannten Maßnahmen gemeinsam angewendet werden: Zunächst werden die Materialteile an einem bildgebenden System vorbeigeführt, das die Farbe der Materialteile bestimmt, und dann werden die Materialteile an einem Stofferkennungssystem vorbeigeführt, das die Stoffsorte der Materialteile ermittelt. Die Sortierung erfolgt dann aufgrund der von den beiden Systemen ermittelten Ergebnisse, so daß die Materialteile nach Stoffsorten und innerhalb jeder Stoffsorte nach Farben sortiert werden. Die beiden Systeme arbeiten dabei völlig unabhängig voneinander; es erfolgt kein Informationsaustausch zwischen dem bildgebenden System und dem Stofferkennungssystem, und kein System beeinflußt das andere.

Ein wesentliches Problem besteht bei den bekannten Verfahren dieser Art darin, daß häufig eine eindeutige Bestimmung der Stoffsorte des Materialteils nicht möglich ist, weil die vom Stofferkennungssystem untersuchte Stelle des Materialteils durch andere Stoffsorten gestört wird. Gemäß dem Dokument US-A-5 041 996 wird für diesen Fall davon ausgegangen, daß die dominierende Anzahl von Sortenerkennungen die Stoffsorte des Materialteils angibt. Wenn jedoch beispielsweise eine Kunststoffflasche mit einem ausgedehnten Etikett aus einem anderen Kunststoff bedeckt ist, ist es durchaus möglich, daß der Kunststoffflasche die Stoffsorte des Etiketts zugeordnet wird.

Aufgabe der Erfindung ist die Schaffung eines Verfahrens, das eine Sortierung von Materialteilen mit sicherer und eindeutiger Bestimmung ihrer Stoffsorten ermöglicht, auch wenn Stellen des Materialteils durch andere Stoffsorten gestört sind.

Zur Lösung dieser Aufgabe ist ein Verfahren zur Sortierung von Materialteilen, insbesondere von Kunststoffteilen, bei welchem die Materialteile mit bekannter Fördergeschwindigkeit an einem Stofferkennungssystem vorbeigeführt werden, das durch berührungslose Abtastung jedes Materialteils in einem Meßfeld dessen Stoffsorte bestimmt und ein die Stoffsorte kennzeichnendes Signal liefert, das zur Sortierung der Materialteile nach ihrer Stoffsorte verwendet wird, und bei welchem die Materialteile an einem bildgebenden System vorbeigeführt werden, das Bilder der Materialteile aufnimmt, aus denen mit Verfahren der elektronischen Bildverarbeitung Farb- und/oder Formmerkmale der Materialteile ermittelt werden, nach der Erfindung dadurch gekennzeichnet, daß aus den ermittelten Farb- und/oder Formmerkmalen Positionsinformationen über Stellen der Materialteile abgeleitet werden, an denen eine eindeutige Bestimmung der Stoffsorte ohne Störung durch andere Stoffsorten möglich ist, und daß die Bestimmung der Stoffsorte durch das Stofferkennungssystem auf solche durch die Positionsinformationen identifizierte ungestörte Stellen beschränkt wird.

Bei dem erfindungsgemäßen Verfahren wird durch die Verknüpfung der Stoffsortenbestimmung mit den Ergebnissen einer elektronischen Bildverarbeitung erreicht, daß die Stoffsortenbestimmung an den Materialteilen nur an Stellen durchgeführt wird, die für eine ungestörte Bestimmung der Stoffsorte geeignet sind. Darüber hinaus ist es möglich, bei Materialteilen, die Bestandteile aus unterschiedlichen Stoffsorten aufweisen, die Stoffsorten der einzelnen Bestandteile getrennt zu bestimmen. Schließlich stehen die durch die elektronische Bildverarbeitung erhaltenen Farb- und/oder Formmerkmale als zusätzliche Sortierkriterien zur Verfügung.

Vorteilhafte Ausgestaltungen und Weiterbildungen des erfindungsgemäßen Verfahrens sowie einer Vorrichtung zur Durchführung des Verfahrens sind in den Unteransprüchen gekennzeichnet.

Weitere Merkmale und Vorteile der Erfindung ergeben sich aus der folgenden Beschreibung von Ausführungsbeispielen an Hand der Zeichnungen. In den Zeichnungen zeigen:
- Fig. 1: eine schematische Darstellung einer Sortieranlage, die zur Durchführung des erfindungsgemäßen Verfahrens ausgebildet ist,
- Fig. 2: eine Detailansicht zur Erläuterung der Stoffsortenbestimmung in der Sortieranlage von Fig. 1,
- Fig. 3: eine Detailansicht zur Erläuterung einer abgewandelten Stoffsortenbestimmung,
- Fig. 4: eine abgeänderte Ausführungsform der Sortieranlage von Fig. 1 und
- Fig. 5: eine Erweiterung der Sortieranlage von Fig. 1.

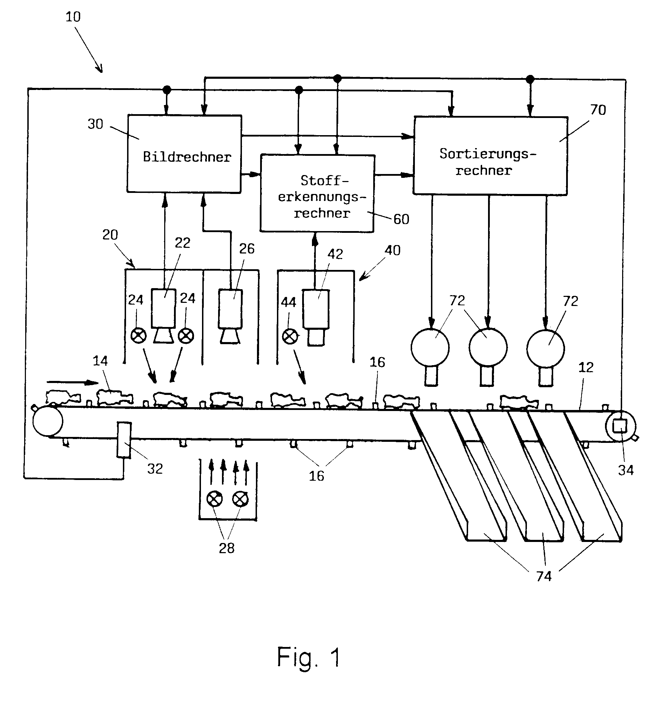

Die in Fig. 1 dargestellte Sortieranlage 10 enthält ein Förderband 12, auf das die zu sortierenden Materialteile 14 so aufgelegt sind, daß sie sich nicht berühren. Als Beispiel ist angenommen, daß die Materialteile 14 Kunststoff-Hohlkörper sind, wie Flaschen, Becher oder andere Behälter, die entweder im ursprünglichen Zustand sind oder durch Pressen verformt sein können. Das Förderband 12 wird mit gleichförmiger Geschwindigkeit in der Pfeilrichtung angetrieben, und es ist so ausgebildet, daß die Materialteile 14 schlupffrei transportiert werden. Zu diesem Zweck kann das Förderband 14 geeignete Strukturen 16 aufweisen, die in der Zeichnung nur schematisch angedeutet sind.

Das Förderband 12 durchläuft ein bildgebendes System 20, in welchem Farbbilder der Materialteile aufgenommen und in Videosignale umgesetzt werden. Das bildgebende System 20 enthält eine erste Farbvideokamera 22, der Lampen 24 zugeordnet sind, die die Materialteile 14 mit diffusem Auflicht beleuchten, so daß die Farbvideokamera 22 Aufnahmen der Materialteile 14 im Auflicht erstellt. Ferner enthält das bildgebende System 20 eine zweite Farbvideokamera 26, der eine oder mehrere Lampen 28 zugeordnet sind, die die Materialteile 14 von der entgegengesetzten Seite des Förderbands 12 her beleuchten, so daß die Farbvideokamera 26 Aufnahmen der Materialteile 14 im Durchlicht erstellt. Damit die Durchlichtbeleuchtung möglich ist, muß das Förderband 12 lichtdurchlässig sein; es kann beispielsweise ein offenporiges Gewebeband sein oder eine gitterartige Struktur haben.

Die Farbvideokameras 22 und 26 können übliche Matrix- oder Zeilenkameras sein; sie können auch spezielle Kameras mit einer auf die zu sortierenden Materialteile abgestimmten spektralen Empfindlichkeit sein. Jede Farbvideokamera gibt an ihren Ausgängen elektrische Bildsignale ab, die beispielsweise die Farbauszüge in den Grundfarben Rot, Grün und Blau darstellen.

Die von den beiden Farbvideokameras 22 und 26 gelieferten Bildsignale werden einem Bildrechner 30 zugeführt, in dem mit bekannten Verfahren der elektronischen Bildverarbeitung aus dem Auflichtbild und aus dem Durchlichtbild Farb- und Formmerkmale der aufgenommenen Materialteile ermittelt werden. Ein hierfür geeigneter Bildrechner ist beispielsweise in der PCT-Veröffentlichung WO 90/10273 ausführlich beschrieben. Bei diesem bekannten Bildrechner werden die von einer Farbvideokamera gelieferten analogen Farbvideosignale bildpunktweise digitalisiert, die digitalisierten Farbvideosignale werden bildpunktweise nach vorgegebenen Farbklassen klassifiziert, und die digitalisierten und klassifizierten Farbvideosignale werden schließlich bildpunktweise in einem Bildspeicher gespeichert. Das auf diese Weise gespeicherte digitalisierte Bild wird schließlich vom Bildrechner aufgrund der Zugehörigkeit der Bildpunkte zu verschiedenen Farbklassen zur Ermittlung von Farbmerkmalen und von geometrischen Formmerkmalen ausgewertet. Ein besonderer Vorteil dieses bekannten Bildrechners besteht darin, daß er durch Vorzeigen von Bildausschnitten, denen jeweils eine Farbklasse zugeordnet ist, trainierbar ist.

Damit die vom Bildrechner 30 ermittelten Farb- und Formmerkmale den Materialteilen 14 und deren Bestandteilen positionsrichtig zugeordnet werden können, erhält der Bildrechner 30 Informationen von einem Positionsgeber 32 und von einem Geschwindigkeitssensor 34. Der Positionsgeber 32 liefert beispielsweise immer dann ein Positionssignal zum Bildrechner 30, wenn sich ein Materialteil 14 in einer vorbestimmten Position befindet, und der Geschwindigkeitssensor 34 liefert zum Bildrechner 30 ein Signal, das die Fördergeschwindigkeit des Förderbands 12 angibt. Aufgrund dieser Signale und des bekannten Abstands zwischen dem Positionsgeber 32 und den Farbvideokameras 22 und 26 kann der Bildrechner 30 die Position jedes Materialteils 14 im Bildfeld jeder Farbvideokamera 22 bzw. 26 im Zeitpunkt der Aufnahme berechnen und jedem ermittelten Farb- und Formmerkmal eine bestimmte Position auf dem Materialteil zuordnen.

Gegebenenfalls kann der Bildrechner 30 auch die Aufnahme eines Bildes dann auslösen, wenn ein Materialteil eine bestimmte Position im Bildfeld der Farbvideokamera einnimmt.

Nach dem Durchlaufen des bildgebenden Systems 20 werden die Materialteile 14 vom Förderband 12 durch ein Stofferkennungssystem 40 transportiert. Das Stofferkennungssystem 40 enthält einen berührungslos arbeitenden Stoffsensor 42 bekannter Art, beispielsweise einen Mikrowellensensor, einen Röntgenstrahlensensor oder einen im nahen Infrarotbereich ("NIR") arbeitenden Spektroskopiesensor, sowie eine Strahlenquelle 44, die die Materialteile 14 mit einer Strahlung bestrahlen, für die der verwendete Stoffsensor 42 empfindlich ist. In der folgenden Beschreibung wird angenommen, daß der Stoffsensor 42 ein NIR-Spektroskopiesensor ist; demgemäß beleuchtet die Strahlenquelle 44 die Materialteile 14 mit Licht, dessen Wellenlängen in den nahen Infrarotbereich hineinreichen. Hierfür kann eine normale Halogenlampe verwendet werden.

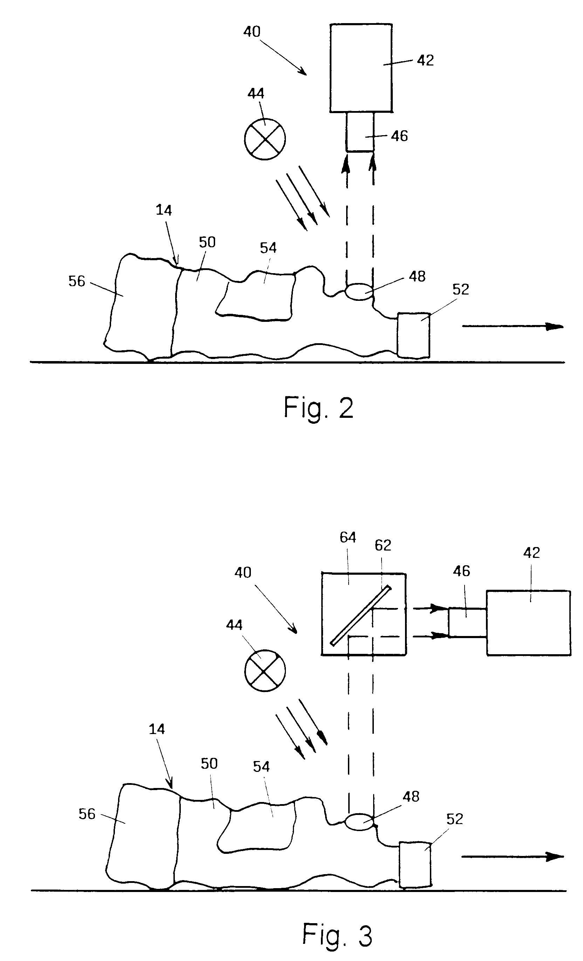

Fig. 2 zeigt, wie der NIR-Spektroskopiesensor 42 ein von dem Förderband 12 transportiertes und von der Strahlenquelle 44 beleuchtetes Materialteil 14 abtastet, um die Stoffsorte des Materialteils 14 zu bestimmen. Der NIR-Spektroskopiesensor 42 erfaßt über eine Optik 46 das Licht, das von der Oberfläche des Materialteils 14 in einem verhältnismäßig kleinen Meßfeld 48 reflektiert wird. Das Meßfeld 48, das durch die Apertur der Optik 46 bestimmt ist, hat im typischen Fall einen Durchmesser von etwa 2 cm. Das über die Optik 46 aufgenommene Licht wird über ein Gitter spektral zerlegt, wobei man sich auf den Wellenlängenbereich von 1600 nm bis 2000 nm beschränkt. In dem Reflexionsspektrum zeigen die einzelnen Kunststoffsorten deutliche Unterschiede, so daß man hieraus durch Vergleich mit einer Bibliothek vorher gelernter Spektren einen bestimmten Kunststoff identifizieren kann. Der NIR-Spektroskopiesensor 42 gibt am Ausgang ein Signal ab, das die erkannte Stoffsorte kennzeichnet, oder ein Signal, das anzeigt, daß eine Stoffbestimmung nicht möglich war.

Bei dem in Fig. 2 dargestellten Beispiel ist angenommen, daß das Materialteil 14 eine verformte Kunststoffflasche mit einem Flaschenkörper 50, einer Verschlußkappe 52, einem Etikett 54 und einem undurchsichtigen Bodenbecher 56 ist. Ein Bodenbecher ist eine zur Verstärkung des Bodenbereichs bei Kunststoffflaschen angebrachte Kunststoffhaube, die in der Regel aus einem vom Kunststoff des Flaschenkörpers verschiedenen Kunststoff besteht. Desgleichen besteht in der Regel die Verschlußkappe aus einem anderen Material als der Flaschenkörper. Die richtige Bestimmung der Stoffsorte eines bestimmten Bestandteils des Materialteils 14, beispielsweise des Flaschenkörpers 50, setzt voraus, daß sich das Meßfeld 48 im Zeitpunkt der Auslesung ausschließlich auf einem Oberflächenbereich dieses Bestandteils befindet, der zudem nicht durch Etikette, Metallprägungen oder andere das Remissionsspektrum verfälschende Aufkleber oder Aufdrucke gestört sein darf. Auch steile Raumkanten, die sich im Meßfeld 48 befinden, können das Meßergebnis verfälschen. Liegt das Meßfeld 48 beispielsweise auf dem Etikett 54, so kann das Meßergebnis unbrauchbar sein, wenn das Etikett aus Papier besteht und daher kein erkennbares Spektrum liefert, oder das Meßergebnis kann falsch sein, wenn das Etikett 54 aus einem anderen Kunststoff als der Flaschenkörper 50 besteht. Wenn das Meßfeld im Zeitpunkt der Auslesung teilweise auf der Verschlußkappe 52 und teilweise auf dem Flaschenkörper 50 liegt, kann die Stoffsorte keines dieser beiden Bestandteile eindeutig bestimmt werden. Das gleiche gilt, wenn das Meßfeld 48 den Flaschenkörper 50 und den Bodenbecher 56 überlappt. Doch selbst wenn der Stoffsensor 42 eine einwandfreie Stoffsortenbestimmung durchgeführt hat, muß eindeutig feststehen, ob die erkannte Stoffsorte dem Flaschenkörper 50, der Verschlußkappe 52, dem Etikett 54 oder dem Bodenbecher 56 zuzuordnen ist.

Diese Probleme werden bei der in Fig. 1 dargestellten Sortieranlage mit Hilfe der im Bildrechner 30 durchgeführten elektronischen Bildverarbeitung gelöst. Aufgrund der ermittelten Farb- und Formmerkmale kann der Bildrechner 30 charakteristische Bestandteile der Materialteile 14, wie die Verschlußkappe, den Flaschenkörper, das Etikett und den Bodenbecher der Kunststoffflasche von Fig. 2, erkennen und Positionsinformationen liefern, die die Positionen der erkannten Bestandteile in dem gespeicherten digitalisierten Bild angeben. Diese Positionsinformationen werden einem dem Stofferkennungssystem 40 zugeordneten Stofferkennungsrechner 60 zugeführt und entweder von diesem oder bereits vom Bildrechner 30 aufgrund der bekannten Fördergeschwindigkeit des Förderbandes 12 und des bekannten Abstands zwischen dem bildgebenden System 20 und dem Stofferkennungssystem 40 auf die Positionen umgerechnet, die diese Bestandteile beim Durchgang durch das Stofferkennungssystem 40 haben. Der Stofferkennungsrechner 60 kann dann auf verschiedene Weisen die Funktion des Stoffsensors 42 so steuern, daß die Stoffsorten der Materialteile 14 bzw. die Stoffsorten ihrer einzelnen Bestandteile richtig erkannt werden.

Eine erste Möglichkeit besteht darin, daß der Stoffsensor 42 fortlaufend die Stoffsorte bestimmt, während die Materialteile 14 durch das Meßfenster 18 gefördert werden, daß aber der Stofferkennungsrechner 60 nur solche Meßergebnisse auswählt, die von Stellen der Materialteile stammen, von denen aufgrund der im Bildrechner 30 ermittelten Form- und Farbmerkmale sicher ist, daß sie für eine ungestörte Bestimmung der Stoffsorte geeignet sind. Aufgund der vom Bildrechner 30 gelieferten Positionsinformationen ist im Stofferkennungsrechner 60 bekannt, wann sich das Meßfeld 48 des Stoffsensors 42 auf einer solchen geeigneten Stelle eines Materialteils befindet. Auf diese Weise ist es auch möglich, die Stoffsorten verschiedener Bestandteile eines Materialteils 14 getrennt zu ermitteln. Ein schnell-messender NIR-Spektroskopiesensor, der z.Zt. erhältlich ist, kann zwischen 10 und 1000 Messungen pro Sekunde liefern. Aufgrund der vom Bildrechner 30 gelieferten Positionsinformationen kann bei dem in Fig. 2 dargestellten Beispiel der Stofferkennungsrechner 60 aus der Vielzahl der Messungen gezielt jene auswählen, die nur von der Verschlußkappe 52, nur vom Flaschenkörper 50, nur vom Etikett 54 oder nur vom Bodenbecher 56 stammen. Dadurch ist eine eindeutige Zuordnung der vom Stoffsensor 42 bestimmten Stoffsorten zu den verschiedenen Bestandteilen des Materialteils 14 möglich.

Eine Abwandlung dieser ersten Möglichkeit besteht darin, daß die Bestimmung der Stoffsorte durch den Stofferkennungssensor 42 nicht fortlaufend geschieht, sondern durch den Stofferkennungsrechner immer dann ausgelöst wird, wenn sich das Meßfeld auf einer für die Stoffsortenbestimmung gewünschten Stelle befindet.

Eine zweite Möglichkeit zur ungestörten Bestimmung der Stoffsorten mit Hilfe des Stofferkennungsrechners 60 besteht darin, daß daß Meßfeld 48 des Stoffsensors 42 auf eine Stelle gerichtet wird, die eine ungestörte Bestimmung der Stoffsorte ermöglicht. Dies kann beispielsweise mit der in Fig. 3 dargestellten abgeänderten Ausführungsform des Stofferkennungssystems 40 erfolgen. Bei dieser Ausführungsform wird das von der Oberfläche des Materialteils 14 im Meßfeld 48 reflektierte Lichtbündel nicht direkt von der Optik 46 des Stoffsensors 42 empfangen, sondern nach Umlenkung durch den Spiegel 62 eines Spiegelgalvanometers 64. Der Stofferkennungsrechner 60 steuert das Spiegelgalvanometer 64 so, daß das Meßfeld 48 vom Spiegel 62 auf eine bestimmte Stelle des Materialteils 14 gerichtet wird, von der aufgrund der im Bildrechner 30 ermittelten Farb- und Formmerkmale feststeht, daß sie für eine ungestörte Bestimmung der Stoffsorte geeignet ist, und deren Position aufgrund der vom Bildrechner 30 gelieferten Positionsinformationen bekannt ist. Falls gewünscht, kann das Spiegelgalvanometer 64 vom Stofferkennungsrechner 60 auch so gesteuert werden, daß das Meßfeld 48 die gewählte Stelle des Materialteils 14 bei dessen Bewegung eine gewisse Zeit verfolgt.

Anstatt das Meßfeld 48 mit Hilfe eines Spiegelgalvanometers 64 abzulenken, wäre es natürlich auch möglich, den gesamten Stoffsensor 42 unter Steuerung durch den Stofferkennungsrechner 60 so zu verschwenken, daß das Meßfeld 48 auf die gewünschte Stelle gerichtet wird. Die Ablenkung mit Hilfe eines Spiegelvalganometers ergibt jedoch den Vorteil, daß sie mit geringer Leistung sehr schnell und praktisch trägheitslos vorgenommen werden kann.

Eine örtlich und zeitlich höher auflösende Stofferkennung kann dadurch erreicht werden, daß die normalerweise kreisförmige Apertur des Stoffsensors 42 durch anamorphotische Linsen oder Lichtleitersysteme so verformt wird, daß sie eine linienförmige, quer zur Förderrichtung ausgerichtete Form erhält. Damit können in Förderrichtung gesehen schmale Segmente vermessen werden. Durch eine zeitliche oder örtliche Steuerung dieser Apertur auf Grund der vom bildgebenden System 20 gelieferten Signale wird eine lokal besser begrenzte Bestimmung der Stoffsorte erreicht als bei Verwendung einer kreisförmigen Apertur. Dadurch kann z. B. die Stoffsorte von Verschlußkappen oder anderen Bestandteile mit kleinen Abmessungen gezielt und ohne Überlappung mit dem Flaschenkörper bestimmt werden.

Insbesondere zur Bestimmung der Stoffsorten von Materialteilen, die aus mehreren unterschiedlichen Kunststoffen bestehen, kann es auch vorteilhaft sein, die Apertur des Soffsensors so aufzuteilen, daß mehrere getrennte Meßfelder entstehen, die dann gleichzeitig erfaßt werden. Eine solche Aufteilung ist mit Hilfe einer Anordnung von Lichtleitern oder durch optische Elemente, wie Linsen oder Masken, leicht durchzuführen. Die Aufteilung des Meßfeldes und die Erfassung der gewünschten Stellen durch die erhaltenen Teilmeßfelder kann vom Stofferkennungsrechner 60 auf Grund der vom Bildrechner 30 gelieferten Informationen gesteuert werden. Beispielsweise kann dadurch bei einer Getränkeflasche, deren Flaschenkörper aus einem Kunststoff besteht und durch ein Etikett aus einem anderen Kunststoff teilweise verdeckt ist, der Flaschenkörper durch zwei getrennte Meßfelder links und rechts vom Etikett gleichzeitig erfaßt werden, ohne daß das Etikett mit erfaßt wird.

Anstatt die Materialteile 14 durch die Strahlenquelle 44 großflächig zu beleuchten und die Form und Ausdehnung des Meßfeldes 48 durch die Apertur des Stoffsensors 42 zu bestimmen, wie dies zuvor angenommen wurde, ist es auch möglich, den Stoffsensor 42 mit großer Apertur auszubilden und die Größe, Form und Lage des Meßfeldes durch eine örtlich und zeitlich begrenzte Beleuchtung mittels der Strahlenquelle 44 zu bestimmen. Es werden dann im Zeitpunkt der Messung nur die Stellen aktiv beleuchtet, an denen die Stoffsortenbestimmung stattfinden soll. Dies wird durch eine vom Stofferkennungsrechner 60 gesteuerte Beleuchtung erreicht, deren Lichtverteilung auf Grund der vom Bildrechner 30 gelieferten Positionsinformationen bestimmt wird. Rechnergesteuerte Lichtventile, die hierfür geeignet sind, können z. B. mit Flüssigkristall-Lichtventilen aufgebaut werden und sind dem Fachmann bekannt. Bei dieser lichtgesteuerten Ausbildung der Meßfelder können die zuvor geschilderten zusätzlichen Maßnahmen der Verformung oder Aufteilung des Meßfeldes auf besonders einfache Weise durchgeführt werden. Beispielsweise kann die Aufteilung des Meßfeldes in mehrere Teilmeßfelder dadurch erreicht werden, daß die Beleuchtung in einem entsprechenden örtlichen Muster erfolgt.

In der Sortieranlage von Fig. 1 werden sowohl die vom Bildrechner 30 gelieferten Farbmerkmal-, Formmerkmal- und Positionsinformationen als auch die vom Stofferkennungsrechner 60 gelieferten Stoffsorteninformationen zu einem Sortierungsrechner 70 geliefert, der aufgrund dieser Informationen die Sortierung der Materialteile 14 steuert. Hierfür sind entlang dem Förderband 12 eine Reihe von Sortierweichen 72 angeordnet, die im einfachsten Fall aus pneumatischen Ejektoren bestehen können, welche die Materialteile 14 über Rutschen 74 in getrennte Behälter ausblasen. Zur Vereinfachung sind in Fig. 1 nur drei solche Sortierweichen dargestellt, doch kann deren Anzahl natürlich beliebig groß sein. Jede Sortierweiche 72 dient dazu, die Materialteile 14 auszusondern, die einer bestimmten Sortierklasse angehören. Am Sortierungsrechner 70 kann der Benutzer die Sortierkriterien für jede Sortierklasse einstellen und jede Sortierklasse einer Sortierweiche 72 zuordnen. Aufgrund der bekannten Fördergeschwindigkeit und der bekannten Abstände der Sortierweichen 72 vom Positionsgeber 32, vom bildgebenden System 20 und vom Stofferkennungssystem 40 kann der Sortierungsrechner 70 genau ermitteln, wann sich ein bestimmtes Materialteil 14 am Ort einer bestimmten Sortierweiche befindet, und er kann diejenige Sortierweiche 72 auslösen, die der Sortierklasse zugeordnet ist, zu der dieses Materialteil gemäß den vom Bildrechner 30 gelieferten Farb- und/oder Formmerkmalen sowie gemäß den vom Stofferkennungsrechner 60 gelieferten Stoffsorteninformationen gehört. Materialteile, die keiner eingestellten Sortierklasse angehören, fallen am Ende des Förderbandes in einen Sammelbehälter.

Auf diese Weise ist eine beliebig feine Sortierung nach einer Vielzahl von Sortierkriterien möglich. So können nicht nur alle Materialteile nach Stoffsorten getrennt sortiert werden, sondern es kann auch innerhalb jeder Stoffsorte oder innerhalb bestimmter Stoffsortengruppen eine Sortierung nach transparenten und nichttransparenten Stoffen, nach gefärbten und ungefärbten Stoffen und schließlich eine Sortierung nach Farben erfolgen. Die Unterscheidung von transparenten und nichttransparenten Stoffen wird insbesondere dadurch ermöglicht, daß Aufnahmen der Materialteile sowohl im auffallenden Licht als auch im Durchlicht gemacht werden.

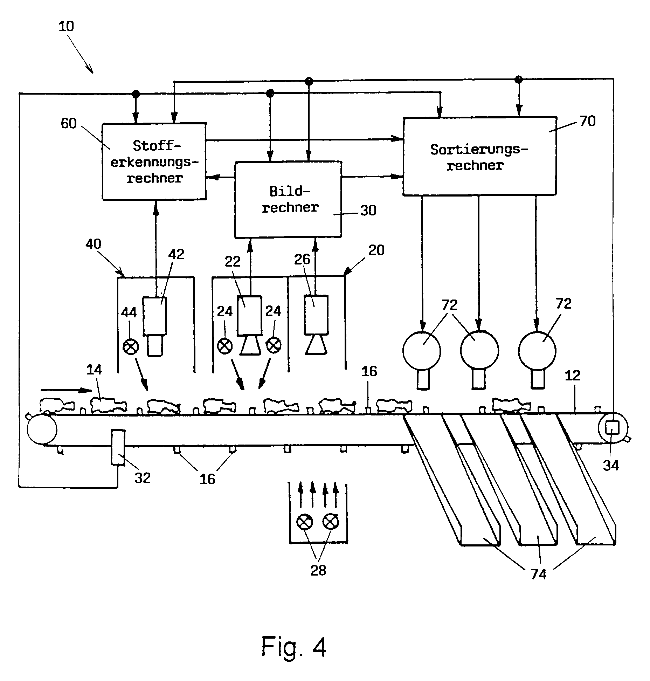

In Fig. 4 ist eine abgeänderte Ausführungsform der Sortieranlage von Fig. 1 dargestellt. Sie enthält die gleichen Bestandteile wie diejenige von Fig. 1, die auch mit den gleichen Bezugszeichen wie in Fig. 1 bezeichnet sind. Die Sortieranlage von Fig. 4 unterscheidet sich von derjenigen von Fig. 1 dadurch, daß das Stofferkennungssystem 40 in der Förderrichtung des Förderbandes 12 nicht hinter, sondern vor dem bildgebenden System 20 angeordnet ist. In diesem Fall muß der Stoffsensor 42 so betrieben werden, daß er fortlaufend die Stoffsorten aller Materialteile bestimmt, die durch das Meßfeld 48 laufen, und der Stofferkennungsrechner 60 muß einen Speicher enthalten, in dem alle vom Stoffsensor 42 gelieferten Meßergebnisse in Zuordnung zu den Positionen der gemessenen Bestandteile gespeichert werden. Ein solcher Speicher kann beispielsweise durch elektronische Verzögerungsglieder realisiert sei. Anschließend erfolgt im Bildrechner 30 wieder die Bestimmung von Farb- und Formmerkmalen und die Positionsbestimmung von Stellen der Materialteile, die für die ungestörte Bestimmung der Stoffsorte geeignet sind. Die vom Bildrechner 30 gelieferten Positionsinformationen werden wieder dem Stofferkennungsrechner 60 zugeführt und können aufgrund der bekannten Fördergeschwindigkeit des Förderbandes 12 und des bekannten Abstandes zwischen dem Stofferkennungssystem 40 und dem bildgebenden System 20 in die Positionen umgerechnet werden, die die betreffenden Stellen zuvor während der Bestimmung der Stoffsorte im Stofferkennungssystem eingenommen hatten. Da die Meßergebnisse im Speicher des Stofferkennungsrechners 60 in Zuordnung zu diesen Positionen gespeichert sind, kann dieser Speicher durch die umgerechneten Positionsinformationen so adressiert werden, daß die Meßergebnisse ausgelesen werden, die von den vom Bildrechner 30 als geeignet befundenen und durch die Positionsinformationen identifizierten Stellen stammen. Diese Meßergebnisse werden in gleicher Weise wie bei der Sortieranlage von Fig. 1 dem Sortierungsrechner 70 zugeführt, der in der zuvor beschriebenen Weise die Sortierweichen 42 gemäß den eingestellten Sortierkriterien steuert.

Bei der Ausführungsform von Fig. 4 ist es nicht möglich, das Meßfeld 48 des Stoffsensors 42 aufgrund der vom Bildrechner 30 gelieferten Positionsinformationen durch Ablenkung auf bestimmte Stellen zu richten, wie dies in Fig. 3 dargestellt ist, denn diese Maßnahme setzt voraus, daß das bildgebende System vor dem Stofferkennungssystem angeordnet ist. Abgesehen davon bietet die Ausführungsform von Fig. 4 die gleichen Möglichkeiten für die Sortierung der Materialteile wie diejenige von Fig. 1.

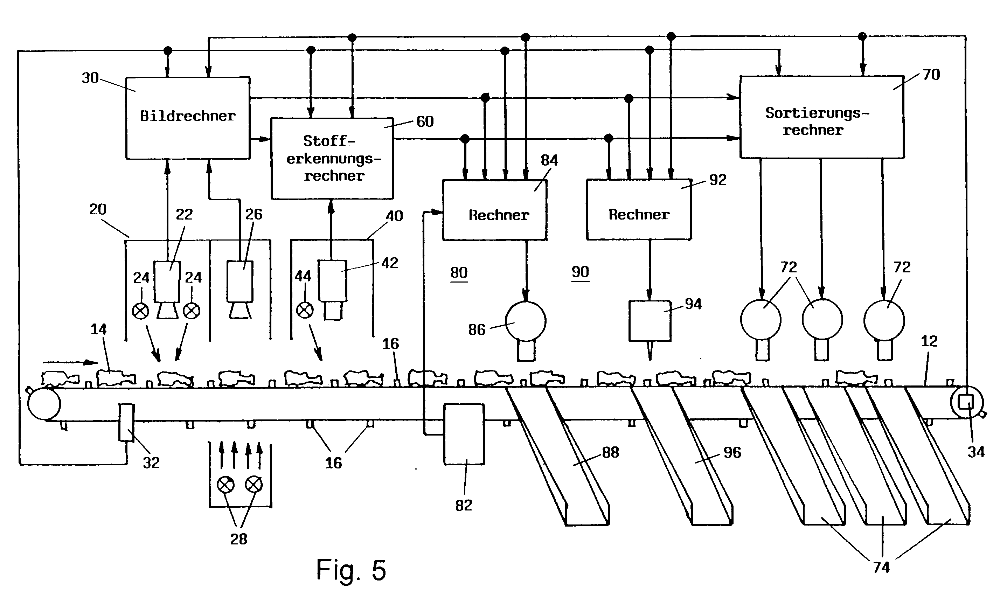

Fig. 5 zeigt eine weitere Ausführungsform der Sortieranlage, die insbesondere erkennen läßt, wie die durch die Bildverarbeitung im Bildrechner 30 gewonnenen Informationen für weitere Zwecke vorteilhaft genutzt werden können. Die Ausführungsform von Fig. 5 stellt eine Erweiterung der Ausführungsform von Fig. 1 dar; sie enthält alle Bestandteile der Ausführungsform von Fig. 1, die mit den gleichen Bezugszeichen wie dort bezeichnet sind. Zusätzlich sind bei der Ausführungsform von Fig. 5 zwischen das Stofferkennungssystem 40 und die Sortierweichen 72 entlang dem Förderband 12 zwei zusätzliche Stationen 80 und 90 eingefügt, durch die die Materialteile 14 gefördert werden.

Die Station 80 dient der Aussonderung von Materialteilen, die aus Glas bestehen, bei dem gewählten Beispiel der Sortierung von Hohlkörpern also insbesondere von Glasflaschen und anderen Glasbehältern. Das Gewicht jedes Hohlkörpers 14 wird durch eine schnelle Bandwaage 82 ermittelt und in einen Rechner 84 eingegeben. Aus dem Gewicht allein ist noch keine Unterscheidung zwischen Glas- und Kunststoffbehältern möglich, wenn die Abmessungen des Hohlkörpers nicht bekannt sind. Deshalb werden vom Bildrechner 30 zum Rechner 84 Informationen über Formmerkmale übertragen, aus denen der Rechner 84 die Größe des Hohlkörpers schätzen kann. Aus der Verknüpfung von Gewicht und geometrischer Größe wird vom Rechner 84 entschieden, ob es sich um einen Glaskörper oder um einen Kunststoffkörper handelt. Der Rechner 84 steuert dann eine Sortierweiche 86 so, daß die Glaskörper über eine Auswurfvorrichtung 88 ausgesondert werden. Die Sortierweiche 86 kann, wie in Fig. 5 dargestellt ist, unmittelbar an der Station 80 angeordnet sein. Sie kann aber auch am Ende des Transportbandes 12 zu den Sortierweichen 72 hinzugefügt sein; in diesem Fall liefert der Rechner 84 zum Sortierungsrechner 70 Informationen, die die Positionen erkannter Glaskörper kennzeichnen, so daß der Sortierungsrechner 70 die Glaskörper durch Betätigung der zugeordneten Sortierweiche aussondern kann. In der Regel ist es vorteilhaft, alle Auswurfstationen am Ende des Förderbandes zusammenzufassen und räumlich benachbart aufzustellen. Die Synchronisation ist durch den Sortierungsrechner 70 leicht möglich, da sich aus den von den verschiedenen Stationen gelieferten Positionsinformationen, der bekannten Bandgeschwindigkeit und den bekannten Abständen zwischen den Stationen und den Sortierweichen der Zeitpunkt der Betätigung der Sortierweichen genau bestimmen läßt.

Die Station 90 ist eine Abtrennstation, in der die Verschlußkappen 52 und die Bodenbecher 56 von den Flaschenkörpern 50 abgetrennt und ausgeworfen werden. Ein Rechner 92 empfängt vom Bildrechner 30 Positionsinformationen über die Positionen von Verschlußkappen 52 und Bodenbechern 56 an den Hohlkörpern 50 und von dem Stofferkennungsrechner 60 Informationen über die Stoffsorten dieser Bestandteile. Aufgrund dieser Informationen entscheidet der Rechner 92, ob eine Verschlußkappe und/oder ein Bodenbecher abzutrennen ist, und er löst im richtigen Zeitpunkt des Vorbeigangs des Hohlkörpers 50 eine Abtrennvorrichtung 94 aus, die das betreffende Teil abtrennt und über eine Auswurfstation 96 auswirft.

Es ist somit zu erkennen, daß in den zusätzlichen Stationen 80 und 90, ebenso wie in dem Stofferkennungssystem 40, die durch die Bildverarbeitung im Bildrechner 30 ermittelten Form- und Farbmerkmale und Positionsinformationen zur gezielten Sortierung mit ausgenutzt werden.

Natürlich können nach Bedarf zu der Sortieranlage von Fig. 5 weitere Stationen hinzugefügt werden. Ein besonderer Vorteil der Erfindung besteht darin, daß die Reihenfolge der Stationen beliebig ist, da die Funktionen der Stationen auf Grund der Positionsinformationen gesteuert werden, die für jede Station unabhängig von den anderen Stationen berechnet werden können.

An den beschriebenen Sortieranlagen können natürlich weitere Abänderungen vorgenommen werden, die dem Fachmann geläufig sind. So kann anstatt eines Förderbandes jedes andere bekannte Fördermittel verwendet werden, das die Materialteile schlupffrei durch die verschiedenen Stationen transportieren kann, beispielsweise ein rotierender Tisch. Ferner können die Funktionen verschiedener Rechner, die in den Zeichnungen der Deutlichkeit wegen getrennt dargestellt sind, von einem gemeinsamen Computer ausgeführt werden.

## Patentansprüche

1. Verfahren zur Sortierung von Materialteilen (14), insbesondere von Kunststoffteilen, bei welchem die Materialteile (14) mit bekannter Fördergeschwindigkeit an einem Stofferkennungssystem (40) vorbeigeführt werden, das durch berührungslose Abtastung jedes Materialteils (14) in einem Meßfeld (48) dessen Stoffsorte bestimmt und ein die Stoffsorte kennzeichnendes Signal liefert, das zur Sortierung der Materialteile (14) nach ihrer Stoffsorte verwendet wird, und bei welchem die Materialteile (14) an einem bildgebenden System (20) vorbeigeführt werden, das Bilder der Materialteile (14) aufnimmt, aus denen mit Verfahren der elektronischen Bildverarbeitung Farb- und/oder Formmerkmale der Materialteile (14) ermittelt werden, dadurch gekennzeichnet, daß aus den ermittelten Farb- und/oder Formmerkmalen Positionsinformationen über Stellen der Materialteile (14) abgeleitet werden, an denen eine eindeutige Bestimmung der Stoffsorte ohne Störung durch andere Stoffsorten möglich ist, und daß die Bestimmung der Stoffsorte durch das Stofferkennungssystem (40) auf solche durch die Positionsinformationen identifizierte ungestörte Stellen beschränkt wird.

2. Verfahren nach Anspruch 1, dadurch gekennzeichnet, daß das bildgebende System (20) in der Förderrichtung der Materialteile (14) vor dem Stofferkennungssystem (40) angeordnet ist.

3. Verfahren nach Anspruch 2, dadurch gekennzeichnet, daß die Bestimmung der Stoffsorte durch das Stofferkennungssystem (40) jeweils dann ausgelöst wird, wenn sich eine durch die Positionsinformationen identifizierte ungestörte Stelle eines Materialteils (14) im Meßfeld (48) des Stofferkennungssystems (40) befindet.

4. Verfahren nach Anspruch 2, dadurch gekennzeichnet, daß die Positionsinformationen zur Steuerung eines Ablenksystems (62,64) verwendet werden, das das Meßfeld (48) des Stofferkennungssystems (40) auf eine durch die Positionsinformationen identifizierte ungestörte Stelle eines Materialteils (14) richtet.

5. Verfahren nach Anspruch 2, dadurch gekennzeichnet, daß das Meßfeld (48) des Stofferkennungssystems (40) einen größeren Bereich der Materialteile (14) erfaßt und daß die Beleuchtung der Materialteile (14) mit einer für die Bestimmung der Stoffsorte erforderlichen Strahlung auf durch die Positionsinformationen identifizierte ungestörte Stellen beschränkt wird.

6. Verfahren nach Anspruch 2, dadurch gekennzeichnet, daß von allen vom Stofferkennungssystem (40) gelieferten Signalen nur solche als gültig verwertet werden, die von durch die Positionsinformationen identifizierten ungestörten Stellen stammen.

7. Verfahren nach Anspruch 1, dadurch gekennzeichnet, daß das Stofferkennungsystem (40) in der Förderrichtung der Materialteile (14) vor dem bildgebenden System (20) angeordnet ist, daß die vom Stofferkennungssystem (40) gelieferten Signale gespeichert werden und daß von den gespeicherten Signalen nur solche als gültig verwertet werden, die den durch die Positionsinformationen identifizierten ungestörten Stellen zugeordnet sind.

8. Verfahren nach einem der vorhergehenden Ansprüche, dadurch gekennzeichnet, daß das Meßfeld (48) des Stofferkennungssystems (40) durch optische Systeme so verformt wird, daß es in der Förderrichtung eine im Vergleich zur Querrichtung hohe örtliche Auflösung besitzt.

9. Verfahren nach einem der vorhergehenden Ansprüche, dadurch gekennzeichnet, daß das Meßfeld (48) des Stofferkennungssystems (40) durch optische Elemente und/oder Lichtleiter so aufgeteilt (14) wird, daß es die Materialteile (14) an verschiedenen Stellen nach einem räumlichen Muster erfaßt.

10. Verfahren nach Anspruch 9, dadurch gekennzeichnet, daß das räumliche Muster durch die Verteilung der Beleuchtung der Materialteile (14) mit einer für die Bestimmung der Stoffsorte erforderlichen Strahlung innerhalb des Meßfeldes (48) festgelegt wird.

11. Verfahren nach Anspruch 9 oder 10, dadurch gekennzeichnet, daß das räumliche Muster so gewählt wird, daß es gleichzeitig mehrere für die Bestimmung der Stoffsorte signifikante Stellen der Materialteile (14) erfaßt.

12. Vorrichtung zur Durchführung des Verfahrens nach einem der vorhergehenden Ansprüche, mit einer Fördereinrichtung (12) zur schlupffreien Förderung der Materialteile (14) mit bekannter Fördergeschwindigkeit, einem bildgebenden System (20), an dem die Materialteile (14) vorbeigeführt werden und das Bilder der Materialteile (14) aufnimmt und in elektrische Bildsignale umsetzt, einem Bildrechner (30), der aus den elektrischen Bildsignalen Farb- und/oder Formmerkmale der Materialteile (14) ermittelt, einem Stofferkennungssystem (40), an dem die Materialteile (14) vorbeigeführt werden und das einen Stoffsensor (42) zur berührungslosen Abtastung jedes Materialteils (14) in einem Meßfeld (48) sowie einen Stofferkennungsrechner (60) enthält, der durch Verarbeitung der Ausgangssignale des Stoffsensors (42) die Stoffsorte im Meßfeld (48) bestimmt und ein die Stoffsorte kennzeichnendes Signal liefert, und mit einer Sortiereinrichtung (70,72,74), die die Materialteile (14) auf Grund der vom bildgebenden System (20) und vom Stofferkennungssystem (40) gelieferten Signale nach festgelegten Sortierklassen sortiert, dadurch gekennzeichnet, daß der Bildrechner (30) aus den ermittelten Farb- und/oder Formmerkmalen Positionsinformationen über Stellen der Materialteile (14) ableitet, an denen eine eindeutige Bestimmung der Stoffsorte ohne Störung durch andere Stoffsorten möglich ist, und daß der Stofferkennungsrechner (60) die Positionsinformationen von dem Bildrechner (30) empfängt und auf Grund der empfangenen Positionsinformationen die Bestimmung der Stoffsorte auf die durch die Positionsinformationen identifizierten ungestörten Stellen beschränkt.

13. Vorrichtung nach Anspruch 12, dadurch gekennzeichnet, daß das bildgebende System (20) eine Farbvideokamera (22) enthält, die Bilder der Materialteile (14) im Auflicht aufnimmt.

14. Vorrichtung nach Anspruch 12 oder 13, dadurch gekennzeichnet, daß das bildgebende System (20) eine Farbvideokamera (26) enthält, die Bilder der Materialteile (14) im Durchlicht aufnimmt.

15. Vorrichtung nach Anspruch 13 oder 14, dadurch gekennzeichnet, daß jede Farbvideokamera (22,26) eine Zeilen- oder Matrixkamera ist.

16. Vorrichtung nach einem der Ansprüche 12 bis 15, dadurch gekennzeichnet, daß der Stoffsensor (42) ein NIR-Spektroskopiesensor ist.

17. Vorrichtung nach einem der Ansprüche 12 bis 16, dadurch gekennzeichnet, daß das bildgebende System (20) in der Förderrichtung der Materialteile (14) vor dem Stofferkennungssystem (40) angeordnet ist.

18. Vorrichtung nach Anspruch 17, dadurch gekennzeichnet, daß im Weg des das Meßfeld (48) bestimmenden Lichtbündels eine optische Ablenkvorrichtung (64) angeordnet ist, die vom Stofferkennungsrechner (60) auf Grund der vom bildgebenden System (20) gelieferten Positionsinformationen so gesteuert wird, daß das Meßfeld (48) auf eine durch die Positionsinformationen identifizierte ungestörte Stelle eines Materialteils (14) gerichtet wird.

19. Vorrichtung nach Anspruch 18, dadurch gekennzeichnet, daß die optische Ablenkvorrichtung ein Spiegelgalvanometer (64) ist.

20. Vorrichtung nach einem der Ansprüche 12 bis 16, dadurch gekennzeichnet, daß das bildgebende System (20) in der Förderrichtung der Materialteile (14) hinter dem Stofferkennungssystem (40) angeordnet ist und daß der Stofferkennungsrechner (60) einen Speicher enthält, in dem alle von Stoffsensor (42) gelieferten Signale gespeichert werden und der unter Adressierung durch die vom Bildrechner (30) gelieferten Positionsinformationen ausgelesen wird.

21. Vorrichtung nach einem der Ansprüche 12 bis 20, dadurch gekennzeichnet, daß der Sortiereinrichtung ein Sortierrechner (70) zugeordnet ist, der Informationen vom Bildrechner (30) und vom Stofferkennungsrechner (60) empfängt und auf Grund dieser Informationen die Sortierung der Materialteile (14) nach durch eingestellte Sortierkriterien bestimmten Sortierklassen steuert.

22. Vorrichtung nach einem der Ansprüche 12 bis 21, gekennzeichnet durch eine an der Fördereinrichtung angeordnete Station (80) zur Aussonderung von Glaskörpern mit einer das Gewicht der Materialteile (14) messenden Bandwaage (82) und einem zugeordneten Rechner (84), der vom Bildrechner (30) Informationen über Formmerkmale empfängt, die die Bestimmung der Größe der Materialteile (14) ermöglichen, und der aufgrund der ermittelten Größe und des gemessenen Gewichts vorhandene Glaskörper erkennt.

23. Vorrichtung nach einem der Ansprüche 12 bis 22, gekennzeichnet durch eine an der Fördereinrichtung angeordnete Station (90) zum Abtrennen von Bestandteilen der Materialteile (14) mit einer Abtrennvorrichtung (94) und einem die Abtrennvorrichtung (94) steuernden Rechner (92), der Positionsinformationen über die abzutrennenden Bestandteile vom Bildrechner (30) empfängt.

## Claims

1. Method for sorting items (14) of miscellaneous materials, in particular plastic parts, wherein the items (14) are carried at known conveying speed past a material recognition system (40), which uses non-contact scanning of each item (14) to determine its material type in a measuring field (48) and delivers a signal that identifies the material type and is used in sorting the items (14) according to material type, and wherein the items (14) are conveyed past an imaging system (20) which takes pictures of the items (14) from which, using electronic image processing techniques, features of colour and/or shape of the items (14) are detected, characterized in that from the features of colour and/or shape position data are derived regarding spots on the items (14) at which an unequivocal determination of the material type is possible without disturbance by other material types, and that the determination of the material type by the material recognition system (40) is confined to such undisturbed spots as identified by the position data.

2. Method according to claim 1 characterized in that the imaging system (20), in the direction of conveyance of the items (14), is located ahead of the material recognition system (40).

3. Method according to claim 2, characterised in that the determination of the material type is triggered by the material recognition system (40) when an undisturbed spot of an item (14), identified by the position data, is located in the measuring field (48) of the material recognition system (40).

4. Method according to claim 2, characterised in that the position data are used for controlling a deflection system (62, 64), so that the measuring field (48) of the material recognition system (40) is directed towards an undisturbed spot on the item (14).

5. Method according to claim 2, characterized in that the measuring field (48) of the material recognition system (40) covers a larger area of the items (14) and that the illumination of the items (14), by radiation necessary to determine the material type, is limited to the undisturbed spots identified by the position data.

6. Method according to claim 2, characterized in that of all the signals supplied by the material recognition system (40), only those are utilized as being valid which originate from undisturbed spots identified by the position data.

7. Method according to claim 1, characterized in that the material recognition system (40), in the direction of conveyance of the items (14), is located ahead of the imaging system (20), that the signals supplied by the material recognition system (40) are stored, and that of the stored signals only those are utilized as being valid, which are allocated to the undisturbed spots as identified by the position data.

8. Method according to any one of the preceding claims, characterized in that the measuring field (48) of the material recognition system (40) is deformed by optical systems in such a way that, in the direction of conveyance, it has a high local resolution compared with the transverse direction.

9. Method according to any one of the preceding claims, characterized in that the measuring field (48) of the material recognition system (40) is divided by optical elements and/or fibre optics in such a way that it covers the items (14) at various spots according to a spatial pattern.

10. Method according to claim 9, characterized in that the spatial pattern is determined by the distribution of the illumination of the items (14) using radiation necessary to determine the material type within the measuring field (48).

11. Method according to claim 9 or 10, characterized in that the spatial pattern is selected in such manner, that it simultaneously detects several spots on the items (14) which are significant for determining the material type.

12. Device for implementing the method according to any one of the preceding claims, comprising a conveying device (12) for the slip-free conveyance of the items (14) at a known speed, an imaging system (20) past which the items (14) are conveyed and which takes pictures of the items (14) and converts these into electrical image signals, an image computer (30) which determines features of colour and/or shape of the items (14) from the electrical image signals, a material recognition system (40), past which the items are conveyed and which contains a material sensor (42) for non-contact scanning of each item (14) in a measuring field (48) and a material recognition computer (60) which by processing the output signals of the material sensor (42) determines the material type in the measuring field (48) and delivers a signal that identifies the material type, and a sorting device (70, 72, 74) which sorts the items (14) on the basis of the signals supplied by the imaging system (20) and by the material recognition system (40) according to fixed sorting categories, characterized in that the image computer (30) derives, from the features of colour and/or shape obtained, position data about spots on the items (14) at which an unequivocal determination of material type is possible without disturbance by other material types, and that the material recognition computer (60) receives the position data from the image computer (30) and, based on the position data received, confines the determination of the material type to the undisturbed spots identified by the position data.

13. Device according to claim 12, characterized in that the imaging system (20) contains a colour video camera (22) which takes pictures of the items (14) in incident light.

14. Device according to claim 12 or 13, characterized in that the imaging system (20) contains a colour video camera (26) which takes pictures of the items (14) in transmitted light.

15. Device according to claim 14 or 15, characterized in that each colour video camera (22, 26) is a line or matrix camera.

16. Device according to any one of the claims 12 to 15, characterized in that the material sensor (42) is an NIR spectroscopic sensor.

17. Device according to any one of the claims 12 to 16, characterized in that the imaging system (20) in the direction of conveyance of the items (14), is located ahead of the material recognition system (40).

18. Device according to claim 17, characterized in that an optical deflection device (64) is located in the path of the light beam that determines the measuring field (48), said deflection device being controlled by the material recognition computer (60) on the basis of the position data supplied by the imaging system (20) in such a way that the measuring field (48) is directed to an undisturbed spot on the item (14), as identified by the position data.

19. Device according to claim 18, characterized in that the optical deflection device is a mirror galvanometer (64).

20. Device according to any one of the claims 12 to 16, characterized in that the imaging system (20), in the direction of conveyance of the items (14), is located behind the material recognition system (40), and that the material recognition computer (60) contains a memory in which all the signals supplied by the material sensor (42) are stored and which is read out by addressing it by the position data supplied by the image computer (30).

21. Device according to any one of the claims 12 to 20, characterized in that a sorting computer (70) is assigned to the sorting device and this computer receives data from the image computer (30) and from the material recognition computer (60) and controls the sorting of the items (14), on the basis of these data, according to sorting categories determined by set sorting criteria.

22. Device according to any one of the claims 12 to 21, characterized by a station (80) located along the conveying device for separating out glass bodies using a belt scale (82) measuring the weight of the items (14), and an associated computer (84) which receives data from the image computer (30) about shape features, which enable the size of the items (14) to be determined, and which detects present glass bodies on the basis of the size and weight measured.

23. Device according to any one of the claims 12 to 22, characterized by a station (90) located along the conveying device for separating components of the items (14) using a separating device (94) and a computer (92) controlling the separating device (94), which computer receives position data from the image computer (30) about the components to be separated.

## Revendications

1. Procédé de tri des morceaux de matière (14), en particulier des morceaux de plastique, dans lequel les morceaux de matière (14) passent, à une vitesse de transport connue, devant un système de détection des matières (40) qui, par balayage sans contact de chaque morceau de matière (14), détermine le type de matière en question dans un champ de mesure (48) et délivre un signal identifiant le type de matière qui est utilisé pour trier les morceaux de matière (14) en fonction de leurs types, et dans lequel les morceaux de matière (14) passent devant un système à affichage graphique (20) qui prend des photos des morceaux de matière (14) à partir desquelles des caractéristiques de couleur et/ou de forme des morceaux de matière (14) sont déterminées par un procédé de traitement électronique de l'image, caractérisé en ce que l'on détermine à partir des caractéristiques de couleur et/ou de forme déterminées, des informations de position sur les endroits des morceaux de matière (14) où une détermination claire du type de matière est possible sans obstruction provenant d'autres types de matières et en ce que la détermination du type de matière par le système de détection des matières (40) est limitée aux endroits non obstrués et identifiés par les informations de position.

2. Procédé selon la revendication 1, caractérisé en ce que le système à affichage graphique (20) est disposé dans le sens de transport des morceaux de matière (14), avant le système de détection des matières (40).

3. Procédé selon la revendication 2, caractérisé en ce que la détermination du type de matière est respectivement déclenchée par le système de détection des matières (40) quand un endroit d'un morceau de matière (14) non obstrué et identifié par les informations de position se trouve dans le champ de mesure (48) du système de détection des matières (40).

4. Procédé selon la revendication 2, caractérisé en ce que les informations de position sont utilisées pour commander un système de déviation (62, 64) qui oriente le champ de mesure (48) du système de détection des matières (40) vers un endroit d'un morceau de matière (14) non obstrué et identifié par les informations de position.

5. Procédé selon la revendication 2, caractérisé en ce que le champ de mesure (48) du système de détection des matières (40) enregistre une plus grande zone des morceaux de matière (14) et en ce que l'éclairage des morceaux de matière (14) par un rayonnement requis pour la détermination du type de matière est limité aux endroits non obstrués et identifiés par les informations de position.

6. Procédé selon la revendication 2, caractérisé en ce que parmi tous les signaux délivrés par le système de détection des matières (40), seuls ceux qui proviennent d'endroits non obstrués et identifiés par les informations de position, sont analysés comme étant valides.

7. Procédé selon la revendication 1, caractérisé en ce que le système de détection des matières (40) est disposé dans le sens de transport des morceaux de matière (14), avant le système à affichage graphique (20), en ce que les signaux délivrés par le système de détection des matières (40) sont stockés en mémoire et en ce que parmi les signaux stockés en mémoire, seuls ceux qui correspondent à des endroits non obstrués et identifiés par les informations de position, sont analysés comme étant valides.

8. Procédé selon l'une quelconque des revendications précédentes, caractérisé en ce que le champ de mesure (48) du système de détection des matières (40) est déformé par des systèmes optiques de telle sorte qu'il possède dans le sens de transport, une résolution locale élevée par comparaison avec le sens transversal.

9. Procédé selon l'une quelconque des revendications précédentes, caractérisé en ce que le champ de mesure (48) du système de détection des matières (40) est séparé par des éléments optiques et/ ou des conduits de lumière de telle sorte qu'il enregistre les morceaux de matière (14) à différents endroits selon un modèle spatial.

10. Procédé selon la revendication 9, caractérisé en ce que le modèle spatial est déterminé par la répartition de l'éclairage des morceaux de matière (14) avec le rayonnement nécessaire à la détermination du type de matière à l'intérieur du champ de mesure (48).

11. Procédé selon la revendication 9 ou la revendication 10, caractérisé en ce que le modèle spatial est sélectionné de telle sorte qu'il enregistre en même temps plusieurs endroits des morceaux de matière (14) significatifs pour la détermination du type de matière.

12. Dispositif permettant de réaliser le procédé selon l'une quelconque des revendications précédentes, comportant un transporteur (12) pour le transport sans glissement des morceaux de matière (14) à une vitesse de transport connue, un système à affichage graphique (20) devant lequel passent les morceaux de matière (14), qui prend des photos des morceaux de matière (14) et les convertit en signaux d'images électriques, un ordinateur graphique (30) qui détermine des caractéristiques de couleur et/ou de forme des morceaux de matière (14) à partir des signaux d'image électriques, un système de détection des matières (40) devant lequel passent les morceaux de matière (14) et qui comporte un capteur de matière (42) pour le balayage sans contact de chaque élément de matière (14) dans un champ de mesure (48) ainsi qu'un ordinateur de détection des matières (60) qui détermine le type de matière dans le champ de mesure (48) par traitement des signaux de sortie du capteur de matière (42) et délivre un signal identifiant le type de matière, et un dispositif de tri (70, 72, 74) qui trie les morceaux de matière (14) en catégories de tri déterminées, sur la base des signaux délivrés par le système à affichage graphique (20) et par le système de détection des matières (40), caractérisé en ce que l'ordinateur graphique (30) déduit, à partir des caractéristiques de couleur et de forme déterminées, des informations de position sur les endroits des morceaux de matière (14) où une détermination claire du type de matériau est possible sans obstruction par d'autres types de matières, et en ce que l'ordinateur de détection des matières (60) reçoit les informations de position de l'ordinateur graphique (30) et sur la base des informations de position reçues, limite la détermination du type de matière aux endroits non obstrués et identifiés par les informations de position.

13. Dispositif selon la revendication 12, caractérisé en ce que le système à affichage graphique (20) comporte une caméra vidéo couleur (22) qui prend des photos des morceaux de matière (14) à la lumière incidente.

14. Dispositif selon la revendication 12 ou la revendication 13, caractérisé en ce que le système à affichage graphique (20) comporte une caméra vidéo couleur (26) qui prend des photos des morceaux de matière (14) à la lumière transmise.

15. Dispositif selon la revendication 13 ou la revendication 14, caractérisé en ce que chaque caméra vidéo couleur (22, 26) est une caméra à lignes ou matricielle.

16. Dispositif selon l'une quelconque des revendications 12 à 15, caractérisé en ce que le capteur de matières (42) est un capteur spectroscopique à infrarouge proche.

17. Dispositif selon l'une quelconque des revendications 12 à 16, caractérisé en ce que le système à affichage graphique (20) est disposé dans le sens de transport des morceaux de matière (14), avant le système de détection des matières (40).

18. Dispositif selon la revendication 17, caractérisé en ce que dans la trajectoire du faisceau lumineux déterminant le champ de mesure (48) est disposé un dispositif de déviation (64) optique commandé par l'ordinateur de détection des matières (60) sur la base des informations de position délivrées par le système à affichage graphique (20) de telle sorte que le champ de mesure (48) soit orienté vers un endroit d'un élément de matière (14) non obstrué et identifié par les informations de position.

19. Dispositif selon la revendication 18, caractérisé en ce que le dispositif de déviation optique est un galvanomètre à miroir (64).

20. Dispositif selon l'une quelconque des revendications 12 à 16, caractérisé en ce que le système à affichage graphique (20) est disposé dans le sens de transport des morceaux de matière (14) derrière le système de détection des matières (40) et en ce que l'ordinateur de détection des matières (60) comporte une mémoire dans laquelle tous les signaux délivrés par le capteur de matières (42) sont stockés et qui est lue, selon un adressage à l'aide des informations de position délivrées par l'ordinateur graphique (30).

21. Dispositif selon l'une quelconque des revendications 12 à 20, caractérisé en ce qu'un ordinateur de tri (70) est associé au dispositif de tri, en ce que cet ordinateur de tri reçoit des informations de l'ordinateur graphique (30) et de l'ordinateur de détection des matières (60) et sur la base de ces informations, commande le tri des morceaux de matières (14) en fonction des catégories de tri déterminées par les critères de tri mis au point.

22. Dispositif selon l'une quelconque des revendications 12 à 21, caractérisé par une station (80) disposée sur le transporteur pour trier les corps en verre avec une bascule courroie (82) évaluant le poids des morceaux de matière (14) et un ordinateur (84) correspondant qui reçoit de l'ordinateur graphique (30) des informations sur les caractéristiques de forme qui permettent de déterminer la taille des morceaux de matière (14) et qui détecte les corps en verre présents sur la base de la taille déterminée et du poids évalué.

23. Dispositif selon l'une quelconque des revendications 12 à 22, caractérisé par une station (90) disposée sur le transporteur pour séparer les éléments des morceaux de matière (14), comportant un dispositif de séparation (94) et un ordinateur (92) commandant le dispositif de séparation (94) et recevant de l'ordinateur des informations de position sur les éléments devant être séparés.
